# EUROPEAN PATENT APPLICATION

(11) **EP 4 036 629 A1**
(43) Date of publication of application: **03.08.2022**
(21) Application number: 22154120.4
(22) Date of filing: 29.01.2022
(51) Int. Cl.: G02B 26/08, G02B 7/182, G02B 7/02

(54) **OPTICAL DEVICE WITH A SUPPORTED FLEXURE JOINT**

(30) Priority: 29.01.2021 DE 102021102166; 28.07.2021 WO PCT/IB2021/056871
(71) Applicant: Optotune AG, 8953 Dietikon (CH)
(72) Inventor: ZESCH, Wolfgang, 8953 Dietikon (CH); PALOU, Xavier, 8953 Dietikon (CH); ZIHLMANN, Michael, 8953 Dietikon (CH); ASCHWANDEN, Manuel, 8953 Dietikon (CH)
(74) Representative: Schulz Junghans Patentanwälte PartGmbB

(57) **Abstract**

The present invention relates to a device (1) for carrying an optical element (2), the device comprising: a pivotable first carrier (10) for carrying the optical element (2), the first carrier (10) being mounted by means of a first bearing (100) so that the first carrier (10) is pivotable about a first axis (A), wherein the first bearing (100) comprises an elastic structure (30) and a support (41, 42) configured to support the first carrier (10), wherein the support (41, 42) is configured to limit a translation of the first carrier (10) in at least a first direction (D1).

## Description

### Specification

The present invention relates to a device, particularly a gimbal, for carrying an optical element.

In optical applications it is often necessary to be able to pivot an optical element in one or two dimensions (i.e. about one axis or two independent axes).

In the state of the art, gimbals are known that comprise one or two static (conventional) bearings per axis. This has the benefit that there is no restitutive force (zero stiffness) in the rotation direction as well as stiffness in all other directions. Furthermore, large angles regarding the pivoting movement / rotation are possible. However, typically, a play is present in such mechanisms that - if not preloaded - will limited precision. Furthermore, static friction, even higher in case of preloading and difficult to control stick slip need to be overcome by the actuator force. Furthermore, many parts are usually involved in such a design and very tight tolerances are mandatory both on parts and assembly. Moreover, conventional bearings are usually not suited for fast (resonant) motions due to missing stiffness.

Furthermore, pivotable joints in bearings based on torsion beams and similar flexures (e.g. one or two torsion beams per rotational axis) undergo elastic deformation in the torsional bars and usually comprise planar structure, defined by the rotational axes. The benefits of such configurations are a simple and cost-effective design needing only a small design space. Furthermore, due to the absence of static friction there is no hysteresis/backlash. Furthermore, there is also no play involved in the motion of the torsion beams and an open loop control is possible by force control. Particularly, a fast operation in resonance is possible. However, the larger stiffness of such a design principle requires a certain force to hold a position of the rotated part and parasitic modes can be encountered especially in a piston mode (out-of-plane mode) which is more critical for large stroke and low resonance frequencies. Furthermore, large displacements/angles are difficult to achieve and large stresses are induced into the elastic elements, especially at large deflections (>5°). Typically, such a design would also need a larger design space due to longer beams to lower stress.

Based on the above, the problem to be solved by the present invention is to provide a device of the afore-mentioned kind having a simple design that allows to achieve a comparatively large deflection as well as ideally large resonant frequencies at the same time while also reducing play.

This problem is solved by a device having the features of claim 1.

Preferred embodiments of these aspects of the present invention are stated in the corresponding sub claims and are described below.

According to claim 1, a device for carrying an optical element is disclosed, the device comprising:
- a pivotable first carrier for carrying the optical element,
- the first carrier being mounted by means of a first bearing to a second carrier or a mount, so that the first carrier is pivotable about a first axis with respect to the second carrier or the mount,
   wherein
- the first bearing comprises an elastic structure and a support configured to support the first carrier, wherein the support is configured to limit a translation of the first carrier in at least a first direction, and
- the elastic structure and the support are both connected to the first carrier and the second carrier respectively, or the elastic structure and the support are both connected to the first carrier and the mount respectively.

The pivotable first carrier is arranged to have an optical element, like a mirror, a prism, a lens, a diffusor or a grating attached thereto. Thus, motion of the first carrier is transmitted to the optical element. In particular, the first carrier and the optical element may be formed monolithically.

The first bearing attaches the first carrier to the second carrier or to the mount. The first bearing determines the relative motion of the first carrier with respect to the second carrier or with respect to the mount. In particular the first axis extends a long a main plane of extension of the first carrier. Preferably, the first axis extends along an axis of symmetry of the first carrier and/or the optical element as seen in top view.

The elastic structure is arranged return the first carrier to its non-deflected position, once the first carrier is being pivoted around the first axis. Thus, the resonance frequency of a rotational motion of the first carrier depends on the stiffness of the elastic structure. The first direction extends in a direction perpendicular to main extension direction of the first carrier and/or the optical element. In particular, the first direction extends perpendicular to the first axis.

The elastic structure and the support are both connected to the first carrier respectively. Moreover, either the elastic structure and the support are both connected to the second carrier respectively or the elastic structure and the support are both connected to the mount respectively. Thus, the elastic structure and the support provide a connection between the same elements. In particular, the movement of the first carrier is not driven through the elastic structure or the support. Preferably, the first bearing is arranged to solely guide the motion of the first carrier. In particular, the deflection of the first carrier is directly driven by means of electromagnetic forces acting on the first carrier.

Here and in the following, the first direction extends in a direction obliquely, in particular perpendicular, to the first direction, unless specified differently. Particularly, advantageously, such a design allows tilting about at least one (the first) axis, but also about two axes (2D), with high frequencies in the range from 10 Hz to 1000 Hz, typically 10 Hz to 250 Hz with a high precision, particularly better than 1 mrad accuracy, particularly better than 10µrad resolution, and large pivoting (rotational) angle (e.g. +/-30°, +/-15°), wherein particularly only small motions are allowed in any other direction than the desirable rotation/pivoting direction which includes undesirable vibration modes in translations or other rotational axes. Preferably, the device can further be operated either resonant (moderate stiffness) or in a static mode (very low stiffness).

Particularly, in an embodiment, the elastic structure is configured to eliminate a play of the support of the first carrier on the second carrier.

Furthermore, according to an embodiment, the elastic structure is configured to provide stiffness for an intended motion direction of the first carrier.

According to a further embodiment, the elastic structure is configured to guide the first carrier in several directions in a play free manner.

Furthermore, the elastic structure is configured to distribute stress.

According to a further preferred embodiment of the present invention, the elastic structure comprises a plurality of spring members, each spring member connecting the first carrier to the second carrier or connecting the first carrier to the mount or connecting the second carrier to the mount.

According to an embodiment, the respective spring member is a flat plate member. particularly cut from a sheet of a suitable material, particularly a metal.

Furthermore, according to a preferred embodiment, the respective spring member comprises a meandering shape.

According to a further preferred embodiment, the spring members extend along a common extension plane, wherein particularly in plane motions of the first carrier along said extension plane are prevented by the spring structure / spring members due to in-plane-stiffness being particularly at least ten times larger than a stiffness of the elastic structure in a torsion mode.

According to yet another embodiment, the spring members are integrally connected to one another and particularly form a single plate member. Preferably, the spring members/said plate member are/is cut (e.g. laser cut or stamped) form a single sheet.

According to a further embodiment of the present invention, the device comprises magnets for pre-loading the elastic structure.

According to a further embodiment, the first carrier comprises a first portion, the first carrier being supported by the support on the second carrier or the mount via the first portion. The first carrier may comprise a second portion, the first carrier being supported by the support on the second carrier or the mount via the second portion. The first and the second portion protruding from opposite sides of the first carrier and the first and the second portion are particularly aligned with one another and with the first axis. Particularly, each of the two portions can be formed as an elongated beam.

According to a preferred embodiment, the spring structure comprises two spring members arranged on either side of the first portion and two spring members arranged on either side of the second portion.

According to a further embodiment, the first portion is supported on the second carrier via a first part of the support. Furthermore, the second portion can be supported on the second carrier via a separate second part of the support.

Preferably, the respective part (i.e. the first part and the second part) of the support can each be one of:
- a sphere; wherein particularly the first direction runs orthogonal to the first axis;
- a hemisphere, wherein particularly the first direction runs orthogonal to the first axis;
- a structure comprising an edge facing the respective support shaft, the respective support shaft being supported on said edge, wherein particularly the first direction runs orthogonal to the first axis;
- a bearing comprising a pin arranged in one of: a hole, a groove, wherein particularly the bearing limits the translation of the first carrier in said first direction and in a further linearly independent second direction, wherein particularly the first direction and the second direction span a plane extending orthogonal to the first axis;
- a bearing comprising a pin being arranged in a bearing sleeve, wherein particularly the bearing sleeve limits said translation of the first carrier in said first direction and in a further linearly independent second direction, wherein particularly the first direction and the second direction span a plane extending orthogonal to the first axis;
- a ball bearing, wherein particularly the ball bearing limits said translation of the first carrier in the first direction and in a further linearly independent second direction, wherein particularly the first direction and the second direction span a plane extending orthogonal to the first axis;
- a slide bearing, particularly a dry slide bearing or a lubricated slide bearing, wherein particularly the slide bearing limits said translation of the first carrier in the first direction and in a further linearly independent second direction, wherein particularly the first direction and the second direction span a plane extending orthogonal to the first axis,
- an elastic body, particularly formed out of an elastomer; wherein particularly the elastic body limits said translation of the first carrier in the first direction and in an opposite second direction, the first direction and the opposite second direction being orthogonal to the first axis;
- a spring, particularly a coil spring or a leaf spring, wherein particularly the spring limits said motion of the first carrier in the first direction being orthogonal to the first axis,
- a contact-free magnetic bearing; wherein particularly the magnetic bearing limits said motion of the first carrier in said first direction, wherein particularly the first direction runs orthogonal to the first axis. Particularly the two magnets repel one another.

Further, in an embodiment, the respective bearing is pre-loaded, particularly by one of: gravity, the elastic structure (particularly by said spring members), pre-loading springs, by means of magnetic forces provided by magnets.

According to yet another embodiment, the support is formed by the elastic structure. For example, the elastic structure comprises at least one leaf spring, wherein the main extension direction of the leaf spring extends along the first direction. In particular, the elastic structure comprises multiple leaf springs, wherein at least one of the multiple leaf springs provides a support in the first direction.

According to a further embodiment of the device according to the present invention, the first carrier is supported on the second carrier via a damper, particularly comprising no or low static stiffness. In particular, the stiffness is selected depending on the inertia of the first carrier such that the pivotable movement has a maximum resonance frequency of 30 HZ.

The optical device according to one of the preceding claims, wherein the second carrier is pivotably supported on a mount so that the second carrier can be pivoted about a second axis thus allowing the first carrier to be pivoted in two dimensions (i.e. about the first and the second axis independently). In particular, the first bearing connects the first carrier to the second carrier or the first bearing connects the second carrier to the mount. Moreover, the device may comprise a second bearing having a support and elastic structure as described herein, wherein the first carrier and the second carrier are connected by the first bearing and the second carrier and the mount are connected by the second bearing.

Furthermore, according to an embodiment, the first carrier is supported on the second carrier via the elastic structure, wherein the elastic structure comprises a first and a second connecting portion protruding from opposite sides of the first carrier, and wherein the elastic structure comprises two first elastic legs connected to the first connecting portion, wherein the first legs protrude from the first connecting portion and diverge so that the first legs form an angle, particularly an acute angle.

According to one embodiment, the elastic structure comprises two first elastic legs, wherein each elastic leg particularly forms a leaf spring. The first legs diverge so that the first legs form an angle, particularly an acute angle and at least one of the first legs is configured to limit a translation of the first carrier in at least the first direction.

According to one embodiment, both first legs limit a translation of the first carrier in at least the first direction. Preferably, the elastic structure comprises two second elastic legs (e.g. each forming a leaf spring) connected to the second connecting portion, wherein the second legs protrude from the second connecting portion and diverge so that the second legs form an angle, particularly an acute angle, too. Particularly, each of the four legs comprises an end section forming a fastening region, the respective leg being connected to the second carrier (or a mount) via its fastening region.

Particularly, the first connecting portion and the first elastic legs connected thereto form a first arch-shape member. Likewise, particularly, the second connecting portion and the second elastic legs connected thereto form a second arch-shape member. The arch-shaped members allow pivoting of the first carrier about the first axis being defined by the arch-shaped members by allowing bending of the connecting portions and legs connected thereto.

According to one embodiment the first carrier is pivotably mounted on the second carrier and the second carrier is pivotably supported on a mount so that the second carrier can be pivoted about a second axis, wherein the first bearing connects the first carrier to the second carrier or the first bearing connects the second carrier to the mount.

According to one embodiment, the first carrier is pivotable about the first axis, and the second carrier is pivotable about a second axis.

According to one embodiment the second axis runs orthogonal to the first axis, the first and the second axis intersect in an intersection point, wherein said intersection point is located within the optical element being arranged on the first carrier.

According to a further embodiment, a resonant frequency of a pivoting movement of the respective carrier (and components arranged thereon) about at least one axis of the first and the second axis is above 100 Hz.

Furthermore, according to an embodiment, a resonant frequency of a pivoting movement of the respective carrier (and components arranged thereon) about at least one axis of the first and the second axis is below 30 Hz.

Furthermore, the optical element being arranged on the first carrier (or second part of the first carrier) is preferably one of: a mirror, a transparent window, a prism.

Further features and advantages of the present inventions as well as embodiments of the present invention shall be described in the following with reference to the Figures, wherein
- Fig. 1: shows a schematic view of an exemplary general configuration of a device according to the present invention,
- Figs. 2 to 5: show different views of an embodiment of a device according to the present invention wherein a first carrier is supported on the second carrier via bearings and connected to the second carrier via an elastic structure,
- Figs. 6 to 9: show different views of a further embodiment of a device according to the present invention wherein a first carrier is supported on the second carrier via elastic bodies and connected to the second carrier via an elastic structure,
- Fig. 10: shows a schematic view of a further embodiment of a device according to the present invention wherein a first carrier is supported on the second carrier via a damping means,
- Figs. 11 to 14: show different views of a further embodiment of a device according to the present invention wherein a first carrier is supported on the second carrier via knifes,
- Figs. 15 to 18: show different views of a further embodiment of a device according to the present invention wherein a first carrier is supported on the second carrier via magnetic bearings and connected to the second carrier via an elastic structure,
- Figs. 19 to 21: show different views of a further embodiment of a device according to the present invention wherein a first carrier is supported on the second carrier via spheres and connected to the second carrier via an elastic structure,
- Figs. 22 to 26: show different views of a further embodiment of a device according to the present invention wherein a first carrier is supported on the second carrier via coil springs and connected to the second carrier via an elastic structure,
- Figs. 27 to 29: show different views of a further embodiment of a device according to the present invention wherein a first carrier is supported on the second carrier via a single sphere and connected to the second carrier via an elastic structure,
- Figs. 30 to 35: show different views of a further embodiment of a device according to the present invention, wherein a first carrier is supported on a second carrier (or another component) via elastic arch-shaped members, and
- Figs 36 to 38: show a further embodiment of a device according to the present invention in a schematic sideview, wherein a second carrier is connected to a mount by means of a first bearing,
- Figs. 39 to 43: show a further exemplary embodiment of a device with a link structure,
- Figs. 44 to 48: show a further embodiment of a device with a link structure.

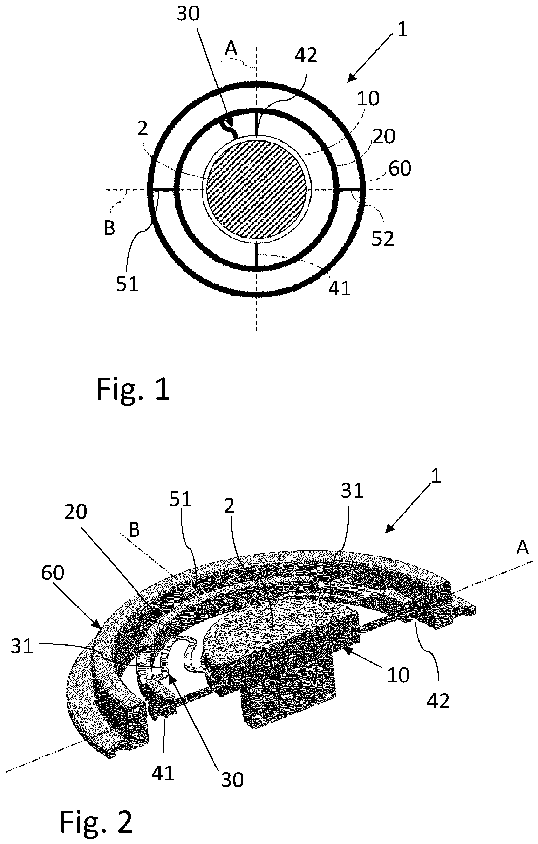

Fig. 1 shows a schematic top view onto an embodiment of a device 1 according to the invention for carrying an optical element 2, wherein the device comprises a pivotable first carrier 10 for carrying the optical element 2, a second carrier 20, the first carrier 10 being supported on the second carrier 20 by means of a first bearing 100. The first bearing comprising a support 41, 42 so that the first carrier 10 is pivotable about a first axis A. Furthermore, the second carrier 20 in turn can be pivotably supported via a further support 51, 52 on a mount 60 of the device 1 so that the second carrier 20 can be tilted (together with the first carrier 10) about a second axis B that can be orthogonal to the first axis A, thus allowing the first carrier 10 (and the optical element 2 thereon) to be actually tilted about two different axes A, B so that the device 1 particularly realizes a gimbal function.

Furthermore, the first bearing 100 comprises an elastic structure 30 being schematically indicated in Fig. 1, the first carrier 10 being coupled to the second carrier 20 via said elastic structure 30, wherein a stiffness of the elastic structure 30 and an inertia of the first carrier 10 and the optical element 2 thereon define a resonance frequency with respect to a pivoting movement of the first carrier 10 (and optical element 2) about the first axis A, and wherein the elastic structure 30 is configured to restrict a movement of the first carrier 10 in at least one direction that is different from a direction of said pivoting movement about the first axis A. As will be described in the following, the present invention provides different embodiments relating particularly the design of the elastic structure 30 as well as to the support 41, 42 via which the first carrier 10 is supported on the second carrier 20. In all embodiments, the optical element 2 can be a mirror, a prism, a transparent window or another optical element that need to be pivoted in order to perform a desired function.

Figs. 2 to 5 show an embodiment of a device 1 according to the present invention comprising a configuration according to Fig. 1, wherein the first carrier 10 carrying the optical element 2 is surrounded by an annular second carrier 20 which in turn is surrounded by an annular mount 60.

Furthermore, the first carrier 10 comprises a first portion 11 and a second portion 12, said portions 11, 12 protruding from opposite sides of the first carrier and being aligned with one another. The two portions 11, 12 define the first axis A and are each supported via a bearing 41, 42 (e.g. a ball bearing or a sliding bearing) on the second carrier 20. I.e. here the support comprises a first part 41 and a second part 42 being formed as bearings 41, 42, respectively, wherein particularly said bearings 41, 42 each limit a translation of the first carrier 10 in a plane perpendicular to the first axis A, i.e. along two linear independent directions D1 and D2 extending orthogonal to the first axis A.

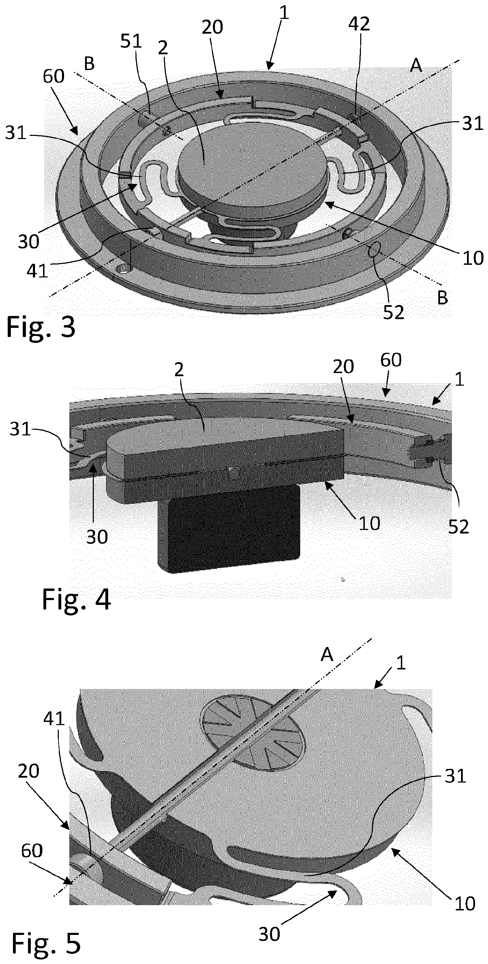

Furthermore, the elastic structure 30 comprises for spring members 31, each spring member 31 comprising a meandering shape and connecting the first carrier 10 to the second carrier 20. The spring members 31 counteracting a movement of the first carrier along the first axis as well as providing a restoring force regarding a pivoting movement / rotation of the first carrier 10 about the first axis A. Preferably, the spring members 31 are integrally connected to one another and form a single flat plate member, as can be seen from Fig. 5. Preferably, two spring members 31 are arranged on either side of the first portion 11 and the two remaining spring members 31 are arranged on either side of the second portion 12 of the first carrier 10.

Particularly, the second carrier 20 is supported on the mount 60 via two axis members 51, 52, each axis member being supported in a bearing 53, 54 on the mount 60, wherein the respective bearing 53, 54 can e.g. be a ball bearing or a sliding bearing. Particularly, the two axis members 51, 52 are aligned with one another and define the second axis B. Preferably, the two axes A, B intersect at an intersection point being located within the optical element 2.

Particularly, in the embodiment shown in Figs. 2 to 5, no or only little preloading is needed to eliminate vertical motions. The design can comprise a play being larger than 10µm with respect to the first axis as long as its preloaded radially. Particularly, no axial definition precision needed, because the spring members 31 define the position.

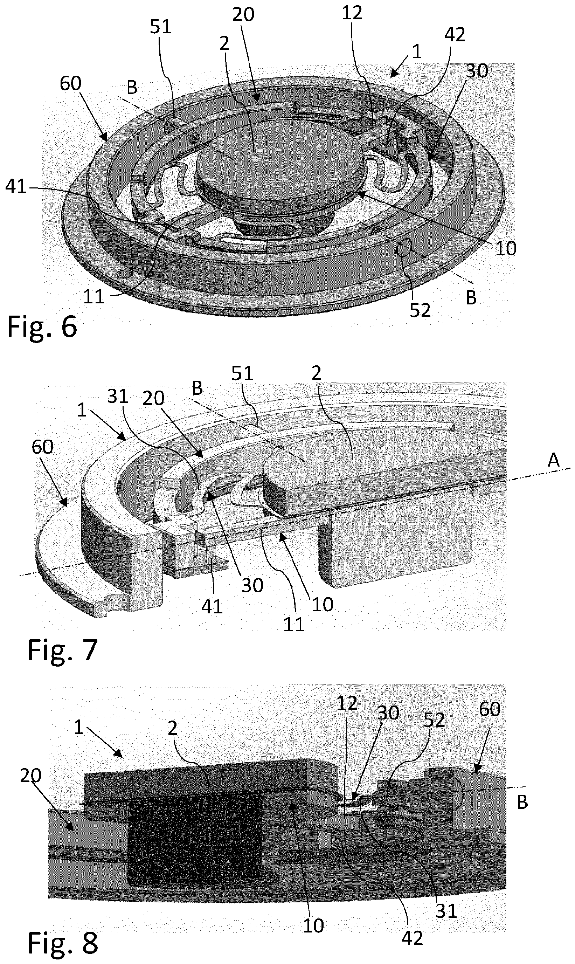

Figs. 6 to 9 show different views of a further embodiment of a device 1 according to the present invention. Particularly, the device 1 can be configured as described in conjunction with Figs.1 to 5, wherein in contrast to Figs. 2 to 5, the first carrier 10 is not supported on the second carrier 20 via bearings specified in relation to Figs. 2 to 5 but via elastic bodies 41, 42. Particularly, the first portion 11 rests on a first bearing in form of a first elastic body 41, and the second portion 12 rests on a second bearing in form of a second elastic body 42. The respective elastic body 41, 42 can comprise a constriction in the center of the respective body 41, 42. Particularly, the bodies 41, 42 can be formed out of an elastomer. In Figs. 6 to 9, the bodies 41, 42 each limit a translation along their respective longitudinal axis, i.e. in two opposite directions D1, D2 that each extend orthogonal to the first axis A.

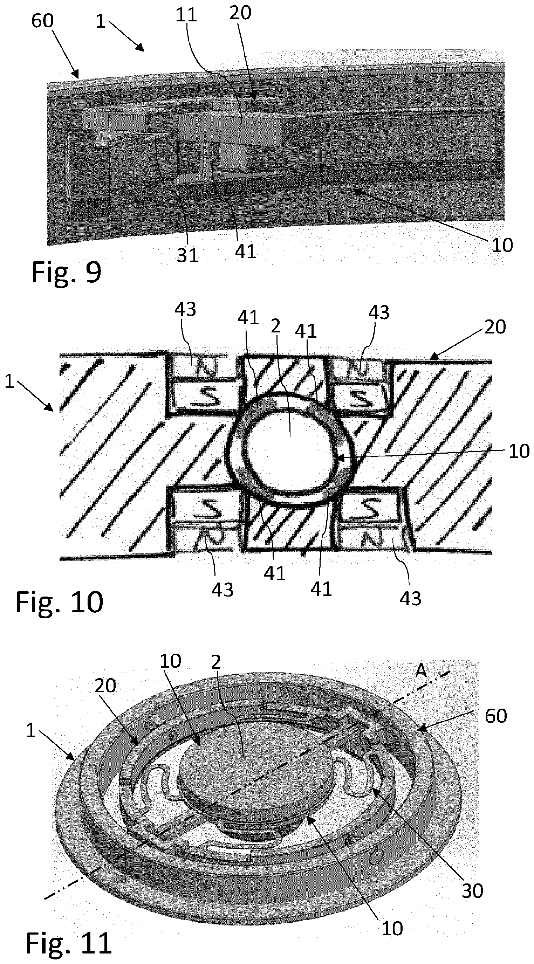

Furthermore, Fig. 10 shows a schematic view of a further embodiment of a device 1 according to the present invention wherein here the first carrier 10 is supported on the second carrier 20 via a support 41, 42 that also provides a damping. The latter does not define a vertical position of the first carrier 10, but merely serves for dampening parasitic vibrations. Particularly, an (e.g. thick) film of a lubricant can be used or a ferrofluid.

In the vertical direction, the dampening means can be formed by a fluid FF (e.g. lubricant or ferrofluid). Particularly, each portion 11, 12 of the first carrier 10 can be arranged in an associated opening 41, 42 of the second carrier 20, which forms the respective support 41, 42 / bearing surface, wherein the fluid FF is arranged in a gap between an inner side of the opening 41 and the respective portion 11, 12. The respective portion 11, 12 that is arranged in its opening 41 still has some play, otherwise the friction between shafts 11, 12 of the first carrier 10 and the second carrier 20 would be too high. This play, still allows the optical element 2 to catch residual vibrations and move up and down. These vibrations might be small in terms of the allowed error in the position/tilt of the optical element 2 (e.g. mirror) but could be a risk for the long-term integrity of the bearing. This embodiment of the device 1 therefore preferably comprises rather loose bearings for the shafts 11, 12 with a thick layer of viscous lubricant FF that dampens those vibrations. A good solution is to use ferrofluids FF as dampening, as they don't escape from the desired positions if they are maintained in their locations by means of magnets 43. The magnets 43 can form a ring, which distributes the ferrofluid. But the idea is to have a well-defined and stable layer of the liquid such that it dampens a certain level of vibrations.

Furthermore, due to the fact that the portions 11, 12 are inserted in corresponding openings 41, 42, each opening 41, 42 limits a translation of the first carrier 10 in a plane perpendicular to the first axis A, i.e. along two linear independent directions D1 and D2 extending orthogonal to the first axis A.

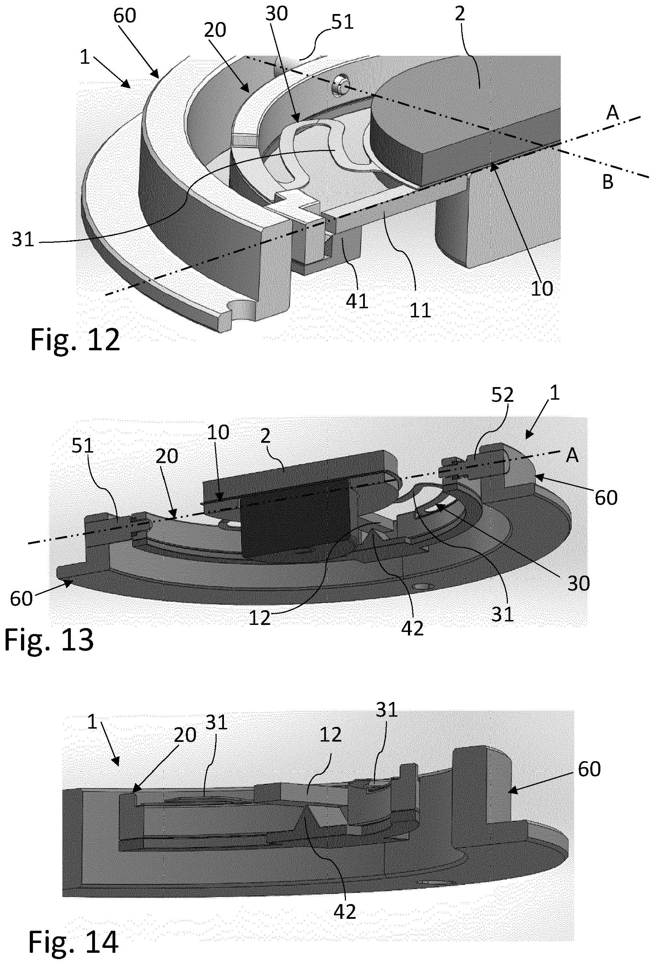

Figs. 11 to 14 show a further embodiment according to the present invention which corresponds to a modification of the embodiment shown in Figs. 6 to 9. Also, here the device 1 can be configured as described in conjunction with Figs. 2 to 5 and 6 to 9, with the difference that the first and the second portion 11, 12 of the first carrier forming shafts 11, 12 are now supported on a knife-structure 41, 42 instead of an elastic body, i.e., each support 41, 42 comprises a sharp edge (e.g. of triangular cross section) on which the respective portion/shaft 11, 12 directly rests in a pivotable manner. The edges are thus aligned with the first axis A and can e.g. be seen in Figs. 12 and 14.

These knifes 41, 42 therefore provide two line-contacts between support 41, 42 and first carrier 10. Preferably, the material of the respective knife/edge 41, 42 comprises a higher hardness than the material of the respective portion 11, 12 of the first carrier 10 that rests on the respective edge 41, 42. This results in abrasion on the first and second portion 11, 12 instead of knife 41, 42. Thereby, the knife 41, 42 cuts into the carrier material, which defines the pivot point of the first carrier 10. Furthermore, slipping of the first and second portion 11, 12 / first carrier 10 on the respective knife 41, 42 is advantageously prevented. According to an embodiment, the respective edge / blade 41, 42 can be covered with an elastomer in order to prevent slipping of the first carrier 10 / portions 11, 12 on the edges 41, 42 to enable a reproducible / repetitive pivoting movement of the first carrier 10 on the support 41, 42 formed by said edges of the second carrier 20. Particularly, the respective edge/knife 41, 42 each limits a translation of the first carrier 10 in a first direction D1 running orthogonal to the first axis A, wherein the limiting particularly corresponds to a hard stop.

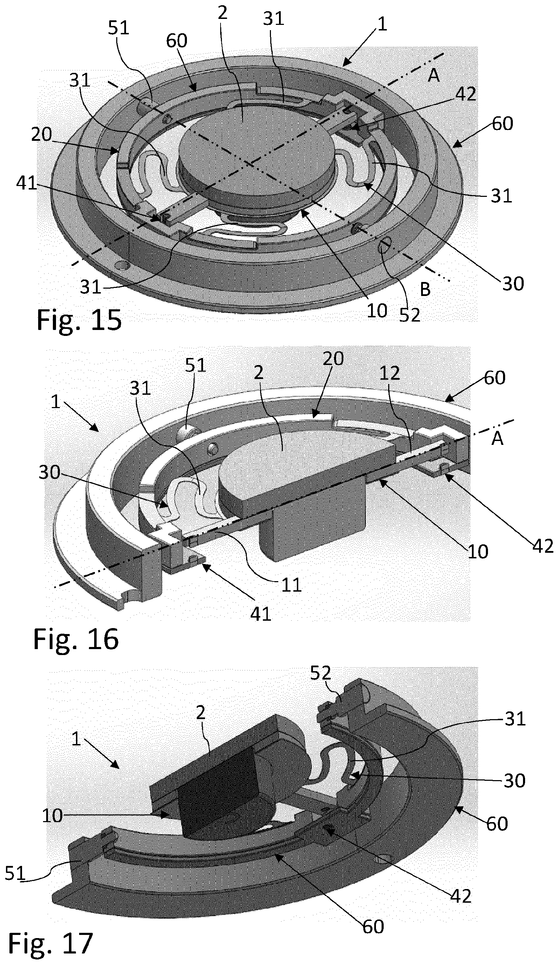

Figs. 15 to 18 show different views of a further embodiment of a device 1 according to the present invention. Also, here, the device 1 can be configured as described in conjunction with Figs. 2 to 5 with the difference that the first and the second portions 11, 12 of the first carrier 10 are now each supported on a magnetic bearing 41, 42, the respective magnetic bearing 41, 42 comprising a first magnet 400 mounted to the respective portion 11, 12 and corresponding second magnets 401 mounted to the second carrier 20.

Particularly, the two magnets 400, 401 can repel one another. The elastic structure 30 gets pre-loaded due to the magnets 400, 401. This reduces the vertical movement (parallel to the polarization axis of the magnets 400, 401) which one would like to avoid. Instead, the tilting mode that is desire sees only a little effect from the magnets 400, 401.

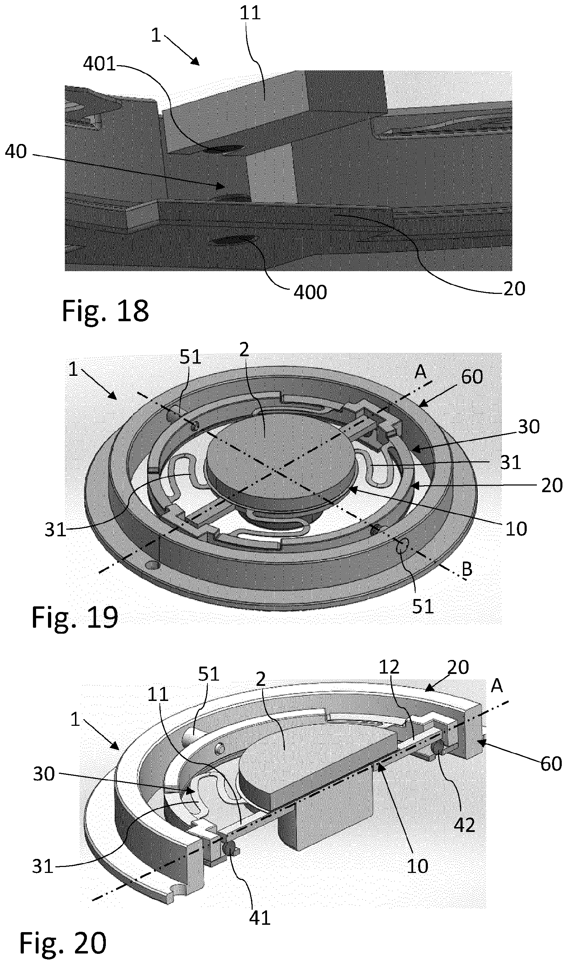

Figs. 19 to 21 show different views of a further embodiment of a device 1 according to the present invention. Also, here, the device 1 can be configured as described in conjunction with Figs. 2 to 5 with the difference that the first and the second portions 11, 12 of the first carrier 10 are now each supported on a support 41, 42 formed by a sphere, respectively. Particularly, the respective sphere 41, 42 limits a translation of the first carrier 10 in a first direction D1 running orthogonal to the first axis A, wherein the limiting particularly corresponds to a hard stop.

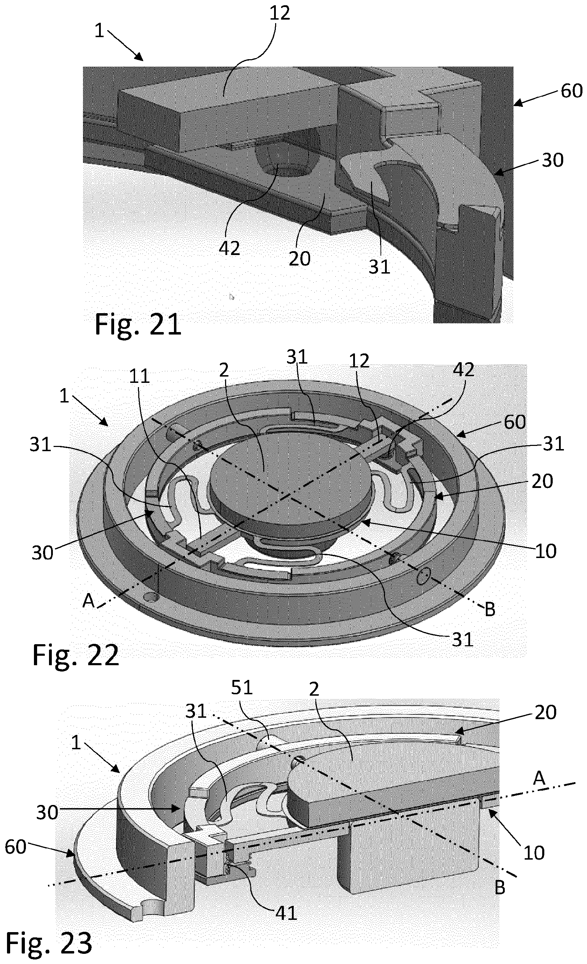

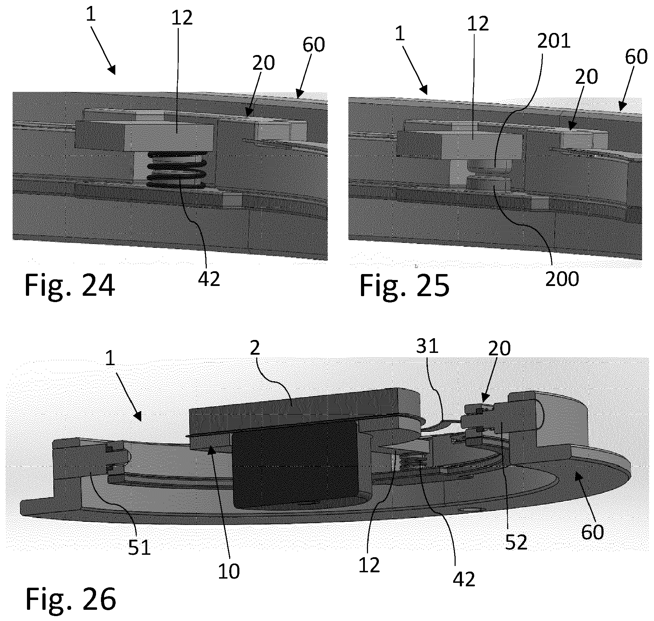

Figs. 22 to 26 show different views of a further embodiment of a device 1 according to the present invention. Also, here, the device 1 can be configured as described in conjunction with Figs. 2 to 5 with the difference that the first and the second portions 11, 12 of the first carrier 10 are now each supported on a bearing 41, 42 formed by a coil spring, respectively. Particularly, as shown in Figs. 24 and 25, the respective portion 11, 12 comprises a pin 201 protruding from the respective portion 11, 12 and being aligned with an associated pin 200 protruding from the second carrier 20. The respective coil spring 41, 42 is arranged on the two aligned pins 200, 201 and thereby fixed in place. Particularly, the respective spring 41, 42 limits a translation of the first carrier 10 in a first direction D1 running orthogonal to the first axis A.

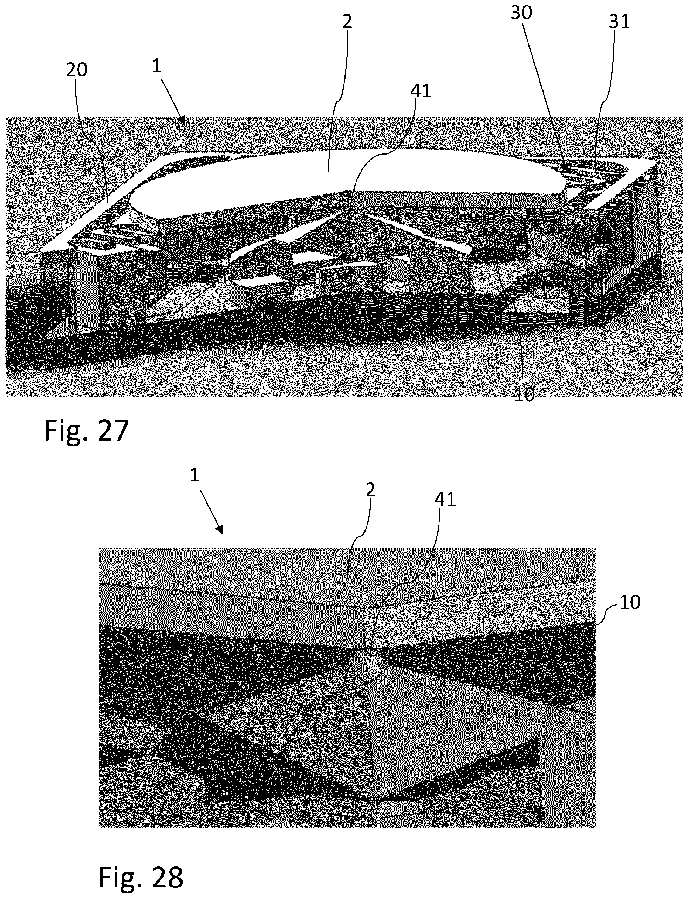

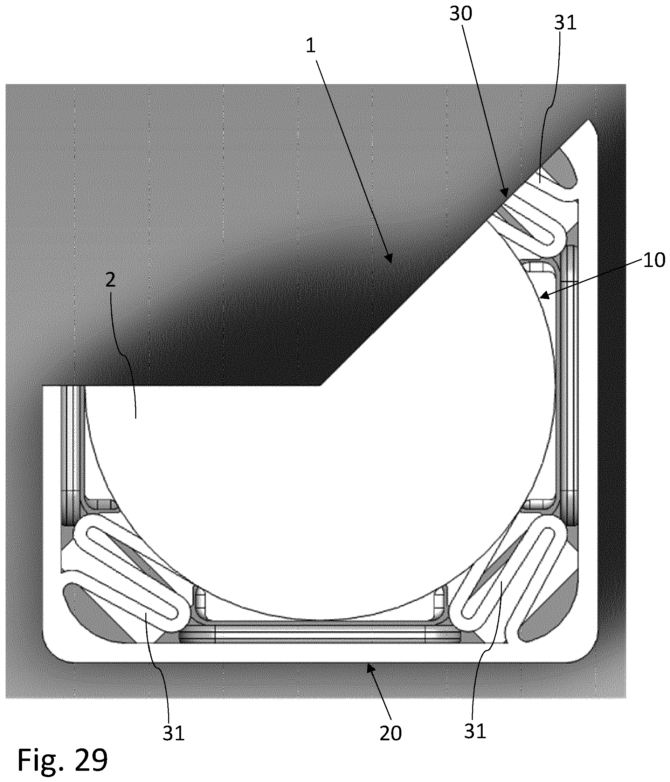

Figs. 27 to 29 show different views of a further embodiment of a device 1 according to the present invention. Also, here, the device 1 can be configured as described in conjunction with Figs. 2 to 5 with the difference that the first carrier 10 does not comprise protruding portions 11, 12, but rests instead with its center on a single support 41, e.g. in form of a sphere 41. Furthermore, the second carrier 20 comprises a rectangular shape, wherein the spring members 30 are each connected to a corner of the second carrier 20. The first carrier 10 can therefore be tilted about at least one axis, preferably about two independent axes. Particularly, the sphere 41, limits a translation of the first carrier 10 in a first direction D1 running orthogonal to the respective rotation axis of the first carrier 10.

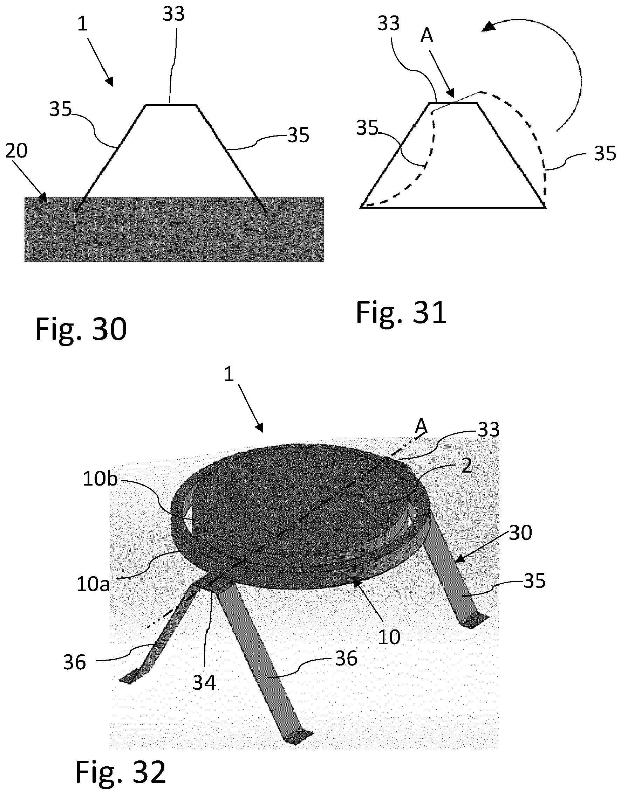

Figures 30 to 35 show different views of a further embodiment of a device 1 according to the present invention, wherein the first carrier 10 is supported on a second carrier 20 (or another component such as e.g. a mount 60) via an elastic support structure in form of two opposing arch-shaped members 30 (cf. e.g. Fig. 32). Particularly, the first carrier 10 comprises a first and a second connecting portion 33, 34 protruding from opposite sides of the first carrier 10. Furthermore, the elastic structure 30 comprises two first elastic legs 35 connected to the first connecting portion 33 as well as two second elastic legs 36 connected to the second connecting portion 34. Particularly, the first legs 35 protrude from the first connecting portion 33 and diverge so that the first legs 35 form an angle W, particularly an acute angle. Likewise, the elastic structure 30 further comprises two second elastic legs 36 connected to the second connecting portion 34, wherein also the second legs 36 protrude from the second connecting portion 34 and diverge so that the second legs 36 form an angle W', particularly an acute angle.

The respective arch-shaped fixture 33, 35; 34, 36 can be formed out of a single part, e.g. out of a thin sheet material. Preferably, the respective member 33, 35; 33, 36 carries no torsion, but bending forces. The arch-shaped members 33, 35; 33, 36 allow for an improved distribution of stress and further to achieve a large stroke and/or lower stiffness in a desired direction while providing stiffness in other directions at the same time. As indicated in Fig. 31, design of the arch-shaped members 33, 35; 34, 36, particularly due to the bending of the legs 35, 36, defines the first axis A about which the first carrier 10 can be tilted. Particularly, the first axis A can be aligned with the connecting portions 33, 34.

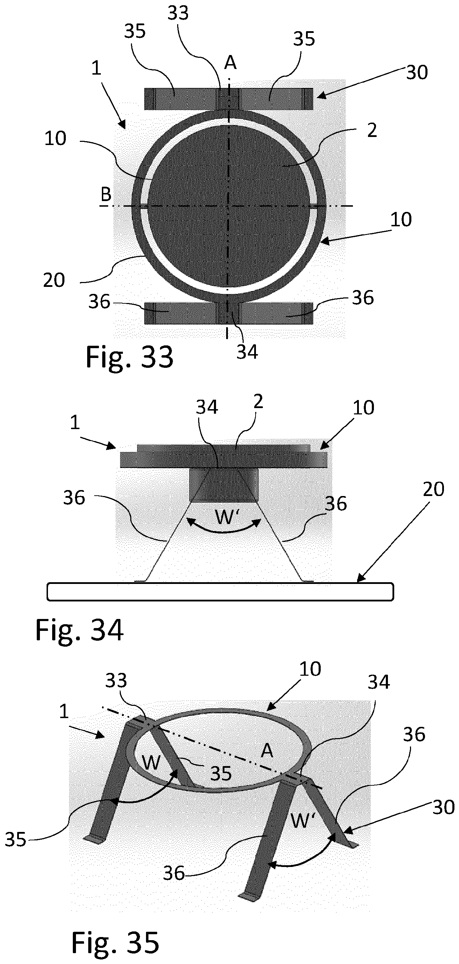

Preferably, as indicated e.g. in Fig. 34, the second carrier 20 is supported on the mount 60, namely via said arch-shaped members 33, 35; 34, 36 described above such that the first carrier 10 is pivotable about the first axis A. The second carrier 20 carrying the optical element 2 is supported on the first carrier 10 so that the second carrier 20 is pivotable about a second axis B (cf. Fig. 33). Thus, also here, the optical element 2 can be tilted about two axes A, B, effectively. The arch shaped members 33, 34, 35 and 36 form both, the elastic structure and a support, wherein the arch shaped members 33, 34, 35, 36 limit a translation of the first carrier 10 in at least the first direction.

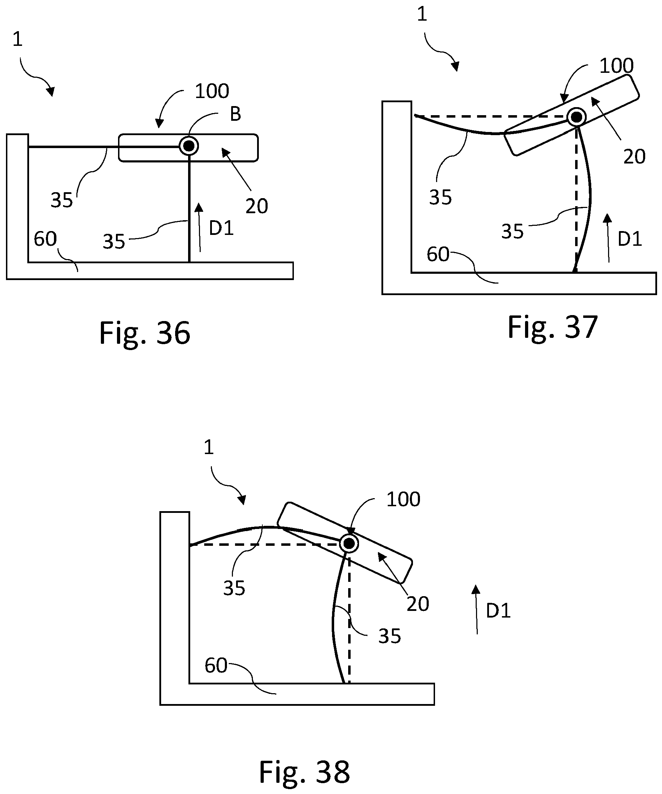

Figure 36, 37 and 38 show an embodiment of the device 1 for carrying an optical element 2 in a schematic side view. Figure 36 shows the second carrier 20 in an undeflected state. Figures 37 and 38 show the second carrier in a deflected state, wherein the second carrier 20 is rotated around the second axis B. The device 1 comprises the second carrier 20, the second carrier 10 being pivotably mounted on the mount 60 by means of the first bearing 100. The second carrier 20 is pivotably about a second axis B.

The elastic structure 30 connects the second carrier 20 to the mount 60, and the support 41, 42 is configured to support the second carrier 20 on the mount 60, wherein the support is configured to limit a translation of the first carrier 10 in at least a first direction D1.

The support is formed by the elastic structure 30. The elastic structure 30 comprises two first elastic legs 35, wherein each elastic leg 35 forms a leaf spring. The first legs 35 diverge so that the first legs 35 form an angle W, particularly an acute angle and at least one of the first legs is configured to limit a translation of the first carrier 10 in at least the first direction D1.

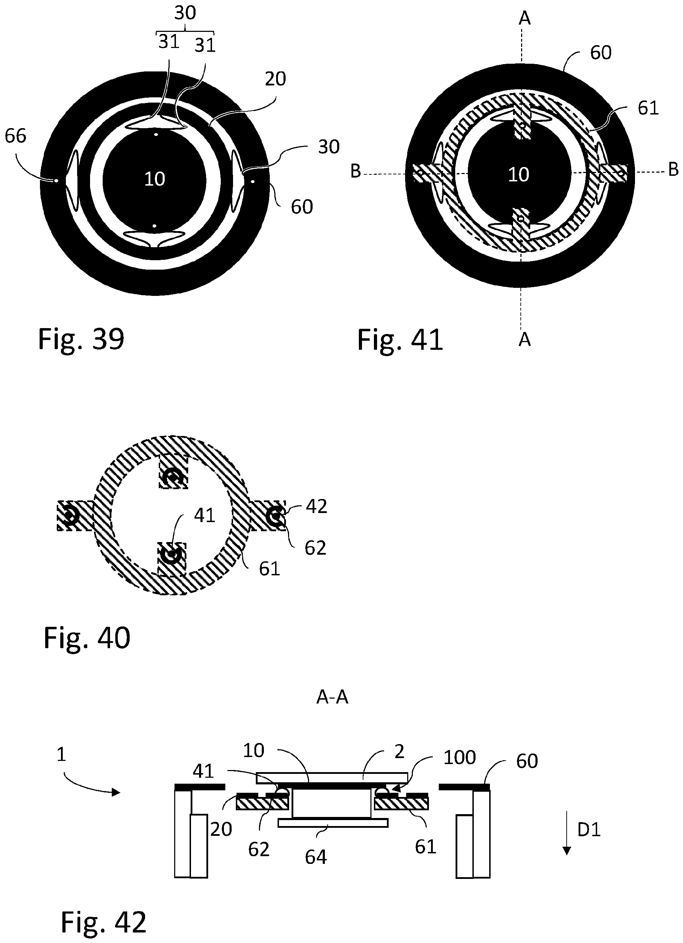

Figs. 39 to 43 show a further embodiment of a device according to the present invention, comprising a link structure 61. The device 1 comprises the first carrier 10 for carrying the optical element 2, the second carrier 20 and the mount 60. As shown in Fig. 39, the second carrier 20 surrounds the first carrier 10 and the mount 60 surrounds the second carrier 20 as seen in a top view. The elastic structures 30 connect the first carrier 10 to the second carrier 20 and the elastic structures 30 connect the second carrier 20 to the mount 60. The elastic structures 30, the first carrier 10, the second carrier 20 and the mount 60 are fabricated in a one-piece manner. The first carrier 10 is pivotable about the first axis A-A and the second carrier is pivotable about the second axis B-B.

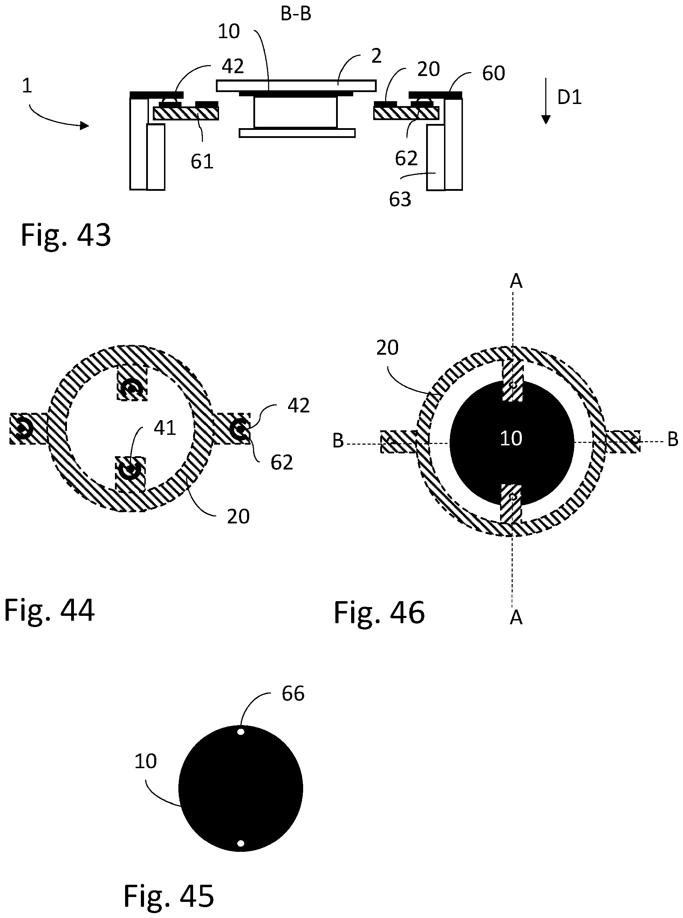

As shown in figures 42 and 43, the link structure 61 is extensively attached to the second carrier 20. The support 41, 42 is arranged between the first carrier 10 and the link structure 61 and between the mount 60 and the link structure 61 and the support 41 limits a motion of the first carrier 10 with respect to the link structure 61 in the first direction D1. The support 42 limits the motion of the mount 60 with respect to the link structure 61 in the first direction D1. The support 41, 42 has a spherical shape, a hemispherical shape, or a knife shape. In particular, the spherically shaped support consists of sapphire or ruby. The link structure 61, the first carrier and in the mount 60 may comprise recesses in which the spherically shaped support 41, 42 is arranged. The elastic structures 30 provide a force along the first direction, wherein the force acts as a preload on the support 41, 42. The force and the recesses define a position of the spherically shaped support 41, 42 with respect to the link structure, the first carrier 10 and the mount 60.

The device comprises a cage structure 62, 64, 65, which is arranged to maintain the spherically shaped support in a dedicated area. As shown in figure 40, the cage structure comprises a C-shaped wall 62, which surrounds the spherically shaped support 41, 42 in lateral directions. As shown in figure 42, a first hard stop 64 limits a movement of the link structure 61 with respect to the first carrier 10 along the first direction D1. The second hard stop 65 limits a movement of the link structure 61 with respect to the mount 60 along the first direction D1. In the event of acceleration forces acting on the device 1, these acceleration forces may exceed the preload of the elastic structures 30, which push the link structure 61 against the mount 60 and against the first carrier 10. Exceeding the preload results in the link structure 61 and the mount 60, or the link structure 61 and the first carrier 10 moving away from each other in an uncontrolled manner, which results in the risk of the supports leaving their intended position. Advantageously the cage structure 62, 64, 65 confines the relative movement of the first carrier 10, the link structure 61, the mount 60 and the support 41, 42. The confinement of the relative movement ensures that the position of the supports 41, 42 do not leave their intended position with respect to the link structure 61, the first carrier 10 and the mount 60, even if there is no preload acting on the supports 41, 42. In particular, the cage structure 62, 64, 65 solely confines the movement of the first or second bearing, when an acceleration force exceeds the preload of the first or second bearing provided by the elastic structure 30.

Figs. 44 to 48 show a further embodiment of a device 1 comprising a link structure 61. The device 1 comprises a magnet 400 which provides a magnetic force along the first direction D1. The magnetic force has the same effect as an elastic structure and provides a preload for the first and the second bearing. As shown in figure 45, the first carrier 10 has a circular shape as seen in a top view. The first carrier 10 comprises alignment structures 66, which align the support 41 with respect to the first carrier 10. The alignment structures 66 may be recesses, having a smaller diameter than the spherically shaped support. In particular, the second carrier 20 and/or the mount 60 may comprise alignment structures 66 for the spherically shaped support 41, 42.

The second carrier 20 has essentially the same shape as the link structure 61 in the embodiment shown in figures 39-43. The second carrier 20 may be fabricated from a sheet material, in particular a sheet metal, for example by means of stamping. As shown in figure 44, the second carrier comprises c-shaped walls 62, which are part of the cage structure 62, 64, 65. The support 41 between the first carrier and the second carrier 20 and the support 42 between the second carrier 20 and the mount 60 are arranged on opposite sides of the second carrier 20. The supports 41, 42 are spherically shaped and the preload by means of the magnet 400 in combination with the alignment structures defines the relative position of the supports 41, 42 with respect to the second carrier 20, the first carrier 10 and the mount 60. The support 41 between the first carrier 10 and the second carrier 20 defines a first axis A for tilting. The support 42 between the second carrier 20 and the mount 60 defines a second axis B for tilting.

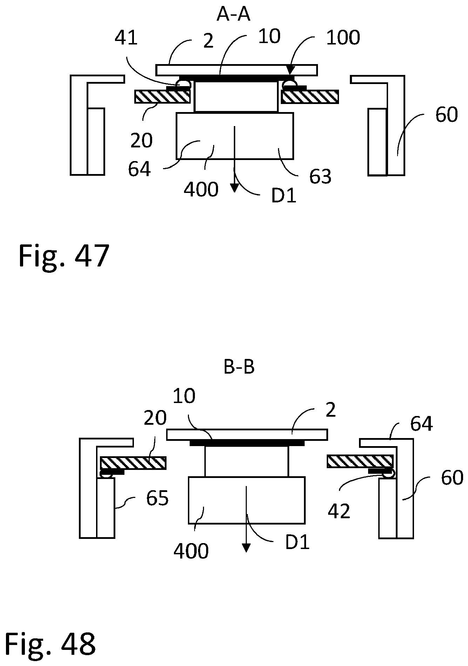

As shown in figure 47 the magnet 400 forms a first hard stop 64, which limits a relative motion of the first carrier 10 with respect to the second carrier along the first direction D1. As shown in figure 48 the second hard stop 65 limits a relative motion of the mount 60 and the second carrier 20 along the first direction D1.

## Claims

1. A device (1) for carrying an optical element (2), the device comprising:
- a pivotable first carrier (10) for carrying the optical element (2),
- the first carrier (10) being mounted by means of a first bearing (100) to a second carrier (20) or a mount (60), so that the first carrier (10) is pivotable about a first axis (A) with respect to the second carrier (20) or the mount (60),
wherein
- the first bearing (100) comprises an elastic structure (30) and a support (41, 42) configured to support the first carrier (10), wherein the support (41, 42) is configured to limit a translation of the first carrier (10) in at least a first direction (D1), and
- the elastic structure (30) and the support (41, 42) are both connected to the first carrier (10) and the second carrier (20) respectively, or the elastic structure (30) and the support (41, 42) are both connected to the first carrier (10) and the mount (60) respectively.

2. The optical device according to claim 1, wherein the device (1) comprises a second carrier (20) and/or a mount (60), wherein the elastic structure (30) comprises a plurality of spring members (31), each spring member (31) connecting the first carrier (10) to the second carrier (20) or to the mount (60).

3. The device according to claim 2, wherein the respective spring member (31) is a flat plate member, wherein the spring members (31) are integrally connected to one another.

4. The device according to one of the preceding claims, wherein the device (1) comprises magnets (400, 401) configured to pre-load the elastic structure (30).

5. The device according to one of the preceding claims, wherein the first carrier (10) comprises a first portion (11), the first carrier (10) being supported by the support (41, 42) on the second carrier (20) or on the mount (60) via the first portion (11), and/or wherein the first carrier (10) comprises a second portion (12), the first carrier (10) being supported by the support (41, 42) on the second carrier (20) or on the mount (60) via the second portion (12), the first and the second portion (11, 12) protruding from opposite sides of the first carrier (10).

6. The device according to claim 5, wherein the first portion (11) is supported via a first part of the support (41), and/or wherein the second portion (12) is supported via a second part of the support (42).

7. The device according to one of the preceding claims, wherein the respective part (41, 42) is one of
- a sphere;
- a hemisphere;
- a structure comprising an edge facing the respective portion (11, 12) of the first carrier (10), the respective portion (11, 2) being supported on said edge;
- a bearing comprising a pin arranged in one of: a hole, a groove;
- a bearing comprising a pin being arranged in a bearing sleeve;
- a ball bearing;
- a slide bearing, particularly a dry slide bearing or a lubricated slide bearing;
- an elastic body, particularly formed out of an elastomer;
- a spring, particularly a coil spring or a leaf spring;
- a contact-free magnetic bearing, wherein particularly the magnetic bearing comprises a first magnet (400) and a second magnet (401), wherein particularly the first and the second magnet (400, 401) repel one another.

8. The device according to one of the preceding claims, wherein the support (41, 42) is pre-loaded, particularly by one of: gravity, the elastic structure (30), pre-loading springs, by means of magnetic forces provided by magnets.

9. The device according to one of the claims 1 to 6, wherein the support is formed by the elastic structure (30).

10. The device according to claim 9, wherein the elastic structure (30) comprises two first elastic legs (35), wherein each elastic leg (35) forms a leaf spring, the first legs (35) diverge so that the first legs (35) form an angle (W), particularly an acute angle and at least one of the first legs is configured to limit a translation of the first carrier (10) in at least the first direction (D1).

11. The device according to claim 10, wherein both first legs limit a translation of the first carrier (10) in at least the first direction.

12. The device according to one of the preceding claims, wherein the first carrier (10) is pivotably mounted on the second carrier (20) and the second carrier (20) is pivotably supported on a mount (60) so that the second carrier (20) can be pivoted about a second axis (B), wherein the first bearing (100) connects the first carrier (10) to the second carrier (20) or the first bearing (100) connects the second carrier (20) to the mount (60).

13. The device according to claim 12, wherein the first carrier (10) is pivotable about the first axis (A), and the second carrier (20) is pivotable about a second axis (B).

14. The device according to claim 12 or 13, wherein the second axis (B) runs orthogonal to the first axis (A), and wherein the first and the second axis (A, B) intersect in an intersection point, wherein said intersection point is located within the optical element (2).

15. The device according to one of the preceding claims, wherein a resonant frequency of a pivoting movement about at least one axis of the first and the second axis (A, B) is above 100 Hz, and a resonant frequency of a pivoting movement about at least one axis of the first and the second axis (A, B) is below 30 Hz.
